# EUROPÄISCHE PATENTSCHRIFT

(11) **EP 1 026 480 B1**
(45) Veröffentlichungstag und Bekanntmachung des Hinweises auf die Patenterteilung: **29.03.2017**
(21) Anmeldenummer: 99102267.4
(22) Anmeldetag: 05.02.1999
(51) Int. Cl.: G01F 1/72, G01F 15/02

(54) **Volumen- oder Massedurchflussmesser**
Volume or mass flowmeter
Débitmètre volumique ou massique

(43) Veröffentlichungstag der Anmeldung: 09.08.2000
(73) Patentinhaber: Endress + Hauser Flowtec AG, 4153 Reinach BL 1 (CH)
(72) Erfinder: Koudal, Ole, 4153 Reinach (CH); Kobbe, Volker, 4108 Witterswil (CH); Brunner, Michael, 4053 Basel (CH); Banholzer, Bernhard, 79588 Efringen-Kirchen (DE)
(74) Vertreter: Andres, Angelika Maria

(56) Entgegenhaltungen:
- US-A- 3 945 253
- US-A- 4 669 301

## Beschreibung

Die Erfindung betrifft Volumen- oder Massedurchflußmesser mit einem Durchflußaufnehmer und mit einer Auswerte-Elektronik.

Zur Messung des Durchflusses eines in einer Rohrleitung o.ä. strömenden Fluids gibt es mehrere auf jeweils einer physikalischen Gesetzmäßigkeit beruhende Prinzipien. Unabhängig von der elektrischen Leitfähigkeit des Fluids kann dessen Volumendurchfluß z.B. mittels auf der Kärmänschen Wirbelstraße beruhenden Vortex-Durchflußmessern oder mittels Ultraschall-Durchflußmessern oder dessen Massedurchfluß z.B mittels auf dem Coriolis-Prinzip beruhenden Massedurchflußmessern, mittels thermischen Massedurchflußmessern oder mittels auf der Ermittlung einer Druckdifferenz über einer Blende beruhenden Massedurchflußmessern gemessen werden. Der Volumendurchfluß von elektrisch leitfähigen Fluiden kann ferner auch mit auf dem Faradayschen Induktionsgesetz beruhenden magnetisch-induktiven Durchflußmessern gemessen werden.

Die Auswerte-Elektronik formt ein nach einem der erwähnten Prinzipien erzeugtes Signal in ein dem Volumendurchfluß- oder Massedurchfluß mit hoher Meßgenauigkeit proportionales Ausgangssignal um. Dieses kann z.B. der in der industriellen Meßtechnik seit langem benutzte und Gleichstrom mit 4 mA bis 20 mA für einen gegebenen Meßbereich sein. Mit dieser Form des Ausgangssignals beschäftigt sich die Erfindung jedoch nicht.

Vielmehr zielt die Erfindung auf die Behebung eines Nachteils, der bei einem in der industriellen Meßtechnik ebenfalls seit langem genormten Wechsel-Ausgangssignal, dessen Frequenz im gegebenen Meßreich zum Durchfluß proportional ist, dann auftreten kann, wenn das an sich in einer durch den mechanischen
Aufbau des Durchflußaufnehmers gegebenen Meß-Richtung fließende Fluid zeitweise, insb. kurzzeitig, in Meß-Gegenrichtung fließt. Ein solcher Gegen-Durchfluß kann nämlich von der Auswerte-Elektronik nicht in eine entsprechende Gegen-Frequenz umgesetzt werden, da ein Wechselsignal bekanntlich keine negative Frequenz haben kann.

In Gerätebeschreibungen und Datenblättern wird der Ausgang, an dem das zuletzt erwähnte genormte Ausgangssignal liegt, üblicherweise als Impuls/ Frequenzausgang bezeichnet.

Der genannte Gegen-Durchfluß tritt z.B. auf, wenn der Durchfluß in einer Rohrleitung gemessen werden soll, in der das Fluid nicht kontinuierlich, sondern, z.B. mittels Dosierpumpen oder bei unter Druck gesetzten Fluiden mittels auf- und zugesteuerten Ventilen, stoßweise bewegt wird. Dosierpumpen haben zwar eine sehr hohe Genauigkeit von bis zu 0,5%, aufgrund ihres Konstruktionsprinzips (z.B. Kolben-, Faltenbalg- oder Membran-Pumpe) sind aber bei jedem Dosierschritt auftretende Rückflüsse, also auch Gegen-Durchflüsse, nicht vermeidbar.

Bisher hat man die Gegen-Durchflüsse in der Auswerte-Elektronik durch eine Bedämpfung versucht auszugleichen. Dadurch reagiert jedoch die Durchflußmessung nur verzögert auf Durchflußänderungen, und zudem muß die Zeitkonstante der bedämpfung dem Durchfluß angepaßt werden, d.h. die Zeitkonstante muß geändert werden bzw. änderbar sein.
Die Patentschrift US4669301B offenbart ein Verfahren sowie eine Vorrichtung zur Durchführung des Verfahrens zur Messung des Durchsatzes eines ein Rohr durchströmenden Mediums, insbesondere des Luftdurchsatzes im Ansaugrohr einer Brennkraftmaschine mit einem auf die Strömungsrichtung des Mediums unempfindlichen Durchsatzmeßwertgeber, insbesondere mit einem Konstanttemperaturanemometer. Dabei werden Gegendurchflüsse anhand von Steigungen eines Gasmengensignals erkannt.
Eine Methode zur genauen Messung eines Flusses eines strömenden Mediums wird durch die Patentschrift US3945253B vorgestellt, wobei nicht auf eine Problematik bezüglich einer eventuellen Umkehr des Flusses eingegangen wird.

Es ist eine Aufgabe der Erfindung, zur Behebung des erwähnten Nachteils einen anderen und vorteilhafteren Weg anzugeben.

Zur Lösung dieser Aufgabe besteht die Erfindung daher in einem Volumen- oder Massedurchflußmesser mit einem Durchflußaufnehmer und mit einer Auswerte-Elektronik, die umfaßt:
- eine erste Teilschaltung zur Erzeugung eines Durchflußsignals,
   -- das in einem gegebenen Meßbereich zum Durchfluß eines im zu messenden Fluids mit hoher Genauigkeit proportional ist,
- eine zweite Teilschaltung zur Erzeugung eines Ausgangssignals,
   -- dessen Frequenz im gegebenen Meßbereich zum Durchfluß des in einer durch den konstruktiven Aufbau des Durchflußaufnehmers bestimmten Meß-Richtung fließenden Fluids mit hoher Genauigkeit proportional ist, und
- eine dritte Teilschaltung,
   -- die einen in Meß-Gegenrichtung während einer Taktdauer ∂t auftretenden Gegen-Durchfluß feststellt, ein entsprechendes Gegen-Durchflusssignal speichert und von einem Durchflusssignal des nächsten gemessenen Durchflusses subtrahiert, wobei die dritte Teilschaltung umfasst:
- einen Taktgenerator,
   -- der periodisch Taktimpulse mit einer vorgegebenen
      Taktdauer erzeugt,
- eine vom Taktgenerator gesteuerte Mittelwertstufe,
   -- deren Eingang das Durchflußsignal zugeführt ist und deren Ausgang ein einem über die Taktdauer gemittelten Mittelwert repräsentierendes Durchfluß-Mittelwert-Signal abgibt,
- einen Schreib/Lese-Speicher,
- einen ersten Dividierer,
   -- von dem ein Divisor-Eingang mit einem die Taktdauer repräsentierenden Taktdauer-Signal gespeist ist und
   --von dem ein Dividend-Eingang mit einem Ausgang des Schreib/Lese-Speichers verbunden ist,
- einen ersten Summierer,
   -- von dem ein erster Eingang an einem Ausgang der Mittelwertstufe und
   -- von dem ein zweiter Eingang an einem Ausgang des ersten Dividierers liegt,
- einen ersten Multiplizierer,
   -- von dem ein erster Eingang mit einem Ausgang des ersten Summierers verbunden ist,
   -- von dem ein zweiter Eingang ein eine reziproke Masse oder ein reziprokes Volumen darstellendes Einstellsignal zugeführt erhält und
   -- von dem ein Ausgang ein eine Frequenz repräsentierendes Frequenz-Signal abgibt,
- einen Dreifach-Komparator,
   -- von dem ein Eingang mit dem Ausgang des ersten Multiplizierers verbunden ist und
   -- von dem ein Ausgang mit einem Eingang der zweiten Teilschaltung verbunden ist und ein Signal abgibt, das
      --- null repräsentiert, wenn das Frequenz-Signal Werte kleiner null repräsentiert ist,
      --- gleich dem Frequenz-Signal ist, wenn dieses Werte zwischen null und einem einstellbaren Maximalwert repräsentiert, und
      --- den Maximalwert repräsentiert, wenn das Frequenz-Signal Werte größer als der Maximalwert repräsentiert,
- einen zweiten Multiplizierer,
   -- von dem ein erster Eingang am Ausgang des Dreifach-Komparators liegt und
   -- von dem ein zweiter Eingang das Taktdauer-Signal zugeführt erhält,
- einen zweiten Dividierer,
   -- von dem ein erster Eingang an einem Ausgang des zweiten Multiplizierers liegt und
   -- von dem ein zweiter Eingang mit dem Einstellsignal gespeist ist,
- einen dritten Multiplizierer,
   -- von dem ein erster Eingang am Ausgang der Mittelwertstufe liegt und
   -- von dem ein zweiter Eingang mit dem Taktdauer-Signal gespeist ist,
- einen Summierer/Subtrahierer, von dem
   -- ein Subtrahend-Eingang an einem Ausgang des zweiten Dividierers,
   -- ein erster Addend-Eingang an einem Ausgang des dritten Multiplizierers und
   -- ein zweiter Addend-Eingang am Ausgang des Schreib/Lese-Speichers liegt sowie
   -- ein Ausgang an einem vom Taktsignal enableten Eingang des Schreib/Lese-Speichers liegt.

Nach einer bevorzugten Weiterbildung der Erfindung summiert die Auswerte-Elektronik die gespeicherten Gegen-Durchflüsse separat auf und für eine Weiterverarbeitung und/oder Anzeige zur Verfügung stellt.

Ein Vorteil der Erfindung besteht darin, daß ein zu einem bestimmten Zeitpunkt aufgetretener Gegen-Durchfluß im Sinne einer Bilanzierung bereits bei der Messung des nächsten Durchflußwerts, sozusagen in real time, berücksichtigt wird. Somit folgt die Bilanzierung entsprechend der Erfindung einer Durchflußänderung ohne Verzögerung, so daß auch keine Zeitkonstanten geändert werden müssen.

Die Erfindung und weitere Vorteile werden nun anhand von Ausführungsbeispielen näher erläutert, die in den Figuren der Zeichnung dargestellt sind. Gleiche Teile sind in unterschiedlichen Figuren mit denselben Bezugszeichen bezeichnet. Wenn es die Übersichtlichkeit erfordert, sind jedoch bereits erwähnte Bezugszeichen in nachfolgenden Figuren weggelassen. Ferner sind bereits beschriebene Einzelheiten in nachfolgenden Figuren nicht mehr erläutert.
Fig. 1 zeigt ein stark schematisiertes Blockschaltbild zur Erläuterung des der Erfindung zugrunde liegenden Prinzips,
Fig. 2 zeigt ein Diagramm zur Veranschaulichung einer der für die Erfindung wesentlichen Eigenschaften der zweiten Teilschaltung,
Fig. 3 zeigt ein Diagramm zur Veranschaulichung des Problems der Erfindung,
Fig. 4 zeigt u.a. ein Blockschaltbild einer bevorzugten Ausgestaltung der zweiten Teilschaltung, und
Fig. 5 zeigt ein Diagramm zur Veranschaulichung der Eigenschaften des Ausgangssignals des Dreifach-Komparators der zweiten Teilschaltung.

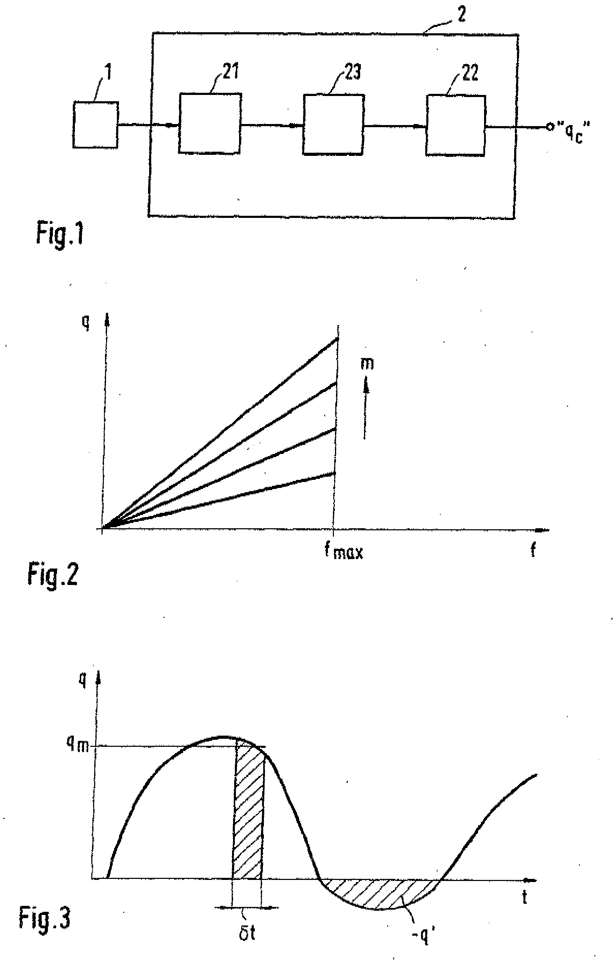

Das in Fig. 1 dargestellte Blockschaltbild zeigt stark abstrahiert und schematisiert den prinzipiellen Aufbau eines Volumendurchfluß- oder Massedurchflußmesser entsprechend der Erfindung. Im Folgenden wird, wenn es nicht darauf ankommt, ob es sich um einen Volumendurchfluß- oder um einen Massedurchflußmesser handelt, nur noch die gemeinsame Bezeichnung Durchflußmesser verwendet. Die bevorzugten Arten von Durchflußmessern, bei denen die Erfindung angewendet werden kann, sind die eingangs bereits angegebenen.

Die Hauptbestandteile eines derartigen Durchflußmessers sind an sich wie üblich ein Durchflußaufnehmer 1 und eine Auswerte-Elektronik 2. Der Durchflußaufnehmer
1 umfaßt im Wesentlichen nicht dargestellte mechanische, für das jeweilige Meßprinzip und dessen Betrieb erforderliche Teile. Dies sind mindestens ein Meßrohr, durch das ein zu messendes Fluid strömt, und gegebenenfalls ein Gehäuse.

Am oder im Meßrohr sind mindestens eine meßprinzip-spezifische Erreger-Anordnung und/oder mindestens eine Sensor-Anordnung fixiert, welch letztere als physikalischelektrischer Wandler dient und ein Ausgangssignal abgibt, das den Durchfluß, insb. bereits direkt, repräsentiert.

Die Auswerte-Elektronik 2 prozessiert dieses Ausgangssignal oder das jeweilige Ausgangssignal von mehreren Sensor-Anordnungen derart, daß der Durchfluß,
z.B auf einem Display, angezeigt werden kann, und/oder transformiert ihn zur weiteren elektronischen Verarbeitung in mindestens eine geeignete andere Signalform,
insb. die für die Erfindung wichtige Signalform des eingangs erwähnten Frequenzausgang-Standards.

Im Falle von magnetisch-induktiven Durchflußmessern ist die meßprinzip-spezifische Erreger-Anordnung eine Anordnung zur Erzeugung eines das Meßrohr durchsetzenden Magnetfelds, z.B. eine Spulenanordnung
mit zugehörigem Spulenstrom-Generator, und die meßprinzip-spezifische Sensor-Anordnung umfaßt mindestens zwei Elektroden, mit denen am strömenden, Fluid, das elektrisch leitfähig sein muß, eine aufgrund des Faradayschen Induktionsgesetzes induzierte Spannung abgegriffen wird.

Im Falle von Vortex-Durchflußmessern ist die meßprinzip-spezifische Erreger-Anordnung ein im Meßrohr dem strömenden Fluid entgegengestellter Staukörper, von dem sich Wirbel und somit Druckschwankungen
ablösen, und die meßprinzip-spezifische Sensor-Anordnung umfaßt mindestens ein Sensorelement, das auf diese Druckschwankungen anspricht.

Im Falle von Coriolis-Massedurchflußmessern wirkt die meßprinzip-spezifische Erreger-Anordnung auf mindestens ein Meßrohr ein und versetzt es in Schwingungen, insb. in Resonanz-Schwingungen, und die meßprinzip-spezifische Sensor-Anordnung umfaßt Sensorelemente, die eine Phasenverschiebung zwischen einlauf- und auslauf-seitigen Meßrohr-Bewegungen abgreifen.

Im Falle von Ultraschall-Durchflußmessern sind die meßprinzip-spezifische Erreger-Anordnung und die meßprinzip-spezifische Sensor-Anordnung derart wirkungsmäßig miteinander verschränkt, daß ein mit dem Meßrohr gekoppelter erster Ultraschall-Wandler und ein mit dem Meßrohr gekoppelter, gegenüber dem ersten versetzt angeordneter zweiter Ultraschall-Wandler periodisch abwechselnd so betrieben werden, daß der eine als Sender und zugleich der andere als Empfänger wirkt. Somit wird der Ultraschall abwechselnd in Strömungsrichtung und in Strömungsgegenrichtung
durch das Fluid geschickt, so daß sich aus der Laufzeitdifferenz des Ultraschalls die Strömungsgeschwindigkeit und somit der Durchfluß ermitteln lassen.

Im Falle von thermischen Massedurchflußmessern ist die meßprinzip-spezifische Erreger-Anordnung ein im Fluid angeordnetes Heizelement, und die meßprinzip-spezifische Sensor-Anordnung umfaßt einen Temperaturfühler, der eine vom Massedurchfluß abhängige Temperatur-Differenz zwischen sich und dem Heizelement erfaßt.

Im Falle von Druckdifferenz-Massedurchflußmessern ist die meßprinzipspezifische Erreger-Anordnung eine in das Fluid gestellte, den Strömungsquerschnitt einschnürende Blende, und die meßprinzip-spezifische Sensor-Anordnung umfaßt je einen bezüglich der Strömungsrichtung vor bzw. hinter der Blende angeordneten Druckabgriff, die auf einen Druckdifferenz-Sensor führen.

In Fig. 1 umfaßt die Auswerte-Elektronik 2 eine erste Teilschaltung 21 zur Erzeugung eines Durchflußsignals "q". Dieses ist in einem gegebenen Meßbereich m zum Durchfluß q eines im Durchflußaufnehmer 1 fließenden Fluids mit hoher Genauigkeit proportional.

Die Auswerte-Elektronik 2 umfaßt ferner eine zweite Teilschaltung 22, die entsprechend dem erwähnten Standard ein Ausgangssignals "q_{c}" erzeugt, dessen Frequenz im gegebenen Meßbereich m zu demjenigen Durchfluß "q_{c}" mit hoher Genauigkeit proportional ist, der in einer durch den konstruktiven Aufbau des Durchflußaufnehmers bestimmten Meß-Richtung des fließenden Fluids auftritt. Die zweite Teilschaltung 22 kann z.B. ein Bechteckgenerator sein, dessen Frequenz f vom Durchfluß q_{c} gesteuert wird und dessen Ausgangssignal ein vorgegebenes, aber festes Puls-Pausen-Verhältnis aufweist.

Diese Zusammenhänge sind im Diagramm der Fig. 2 schematisch dargestellt. Für Fig. 2 ist der Einfachheit halber vorausgesetzt, daß die Koordinaten-Achsen jeweils eine lineare Teilung haben, so daß die Abhängigkeit q ~ f streng linear ist, also eine durch den Koordinaten- Ursprung gehende Geraden-Schar ergibt, deren Parameter ein einem Maximalwert fₘₐₓ der Frequenz f zugeordneter Meßbereich m des Durchflusses q ist.

In Fig. 1 befindet sich zwischen der ersten und der zweiten noch eine dritte Teilschaltung 23, die einen in Meß-Gegenrichtung während eines Abtastintervalls ∂t auftretenden Gegen-Durchfluß -q' feststellt, speichert und vom nächsten gemessenen Durchfluß subtrahiert.

Fig. 3 dient der Erläuterung des mit dem Auftreten dieses Gegen-Durchflusses -q' verbundenen Nachteils. Fig. 3 ist ein Diagramm, in dem über der Abszisse für die Zeit als Ordinate der Durchfluß q aufgetragen ist.

Die Kurve der Fig. 3 verläuft nicht nur oberhalb der Abszisse, wo also die q-Werte positiv sind, sondern auch unterhalb davon, so daß es auch negative q-Werte -q' gibt. Diese gehen auf die eingangs erläuterten Ursachen zurück und verfälschen das Meßergebnis bzw. verringern dessen Genauigkeit. Ferner ist in Fig. 3 eine Dauer ∂t dargestellt, während der der Durchfluß einen Mittelwert qₘ hat.

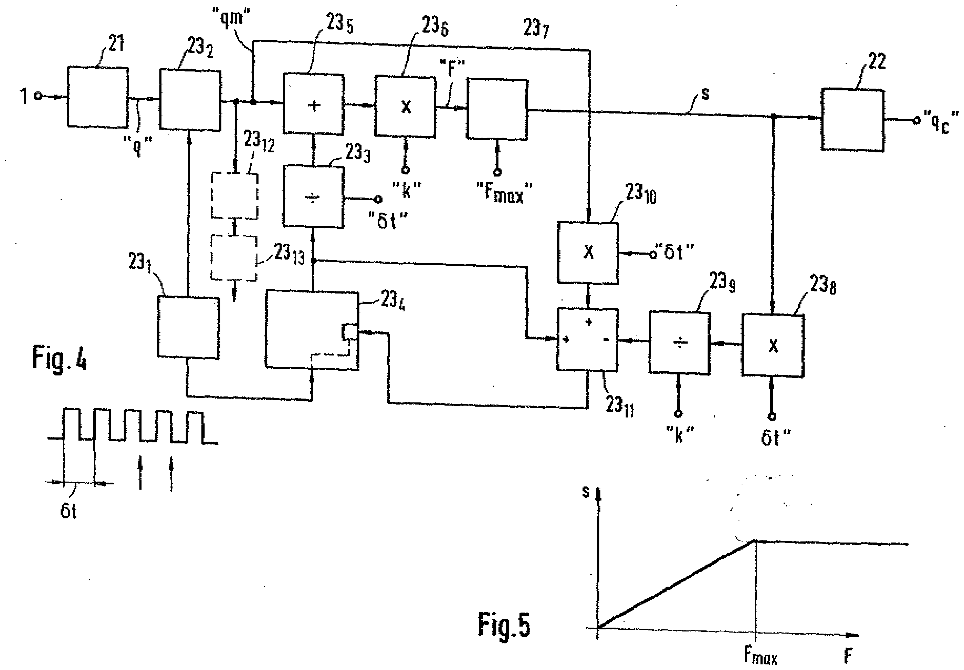

Im Blockschaltbild der Fig. 4 sind Einzelheiten einer bevorzugten Ausgestaltung dargestellt, die im Wesentlichen die dritte Teilschaltung 23 betreffen. Ein Taktgenerator
231 dient der Erzeugung von periodischen Taktimpulsen, die eine vorgegebene bzw. vorgebbare Taktdauer ∂t haben, also gleich der Dauer ∂t von Fig. 3 sind.

Links unterhalb des Taktgenerators 23₁ ist der zeitliche Verlauf der Taktimpulse dargestellt; diese sind hier Rechteckimpulse mit einem Puls-Pausen-Verhältnis eins und mit einer geeigneten Frequenz.

Vom Taktgenerator 23₁ ist eine Mittelwertstufe 23₂ angesteuert, deren Eingang das Durchflußsignal "q" zugeführt ist. Deren Ausgang gibt am Ende jedes Taktimpulses ein dem über die Taktdauer ∂t gemittelten Mittelwert qₘ repräsentierendes Durchfluß-Mittelwert-Signal "qₘ" ab.

Ein Divisor-Eingang eines ersten Dividierers 23₃ ist mit einem die Taktdauer 61 repräsentierenden Taktdauer-Signal "∂t" gespeist. Ein Dividend-Eingang des Dividierers 23₃ ist mit einem Ausgang eines Schreib/Lese-Speichers 23₄ verbunden, der z.B. ein üblicher RAM, aber auch ein EEPROM sein kann.

Ein erster Eingang eines ersten Summierers 23₃ liegt an einem Ausgang der Mittelwertstufe 23₂, ein zweiter Eingang an einem Ausgang des ersten Dividierers 23₃ und ein Ausgang an einem ersten Eingang eines ersten Multiplizierers 23₃. Einem zweiten Eingang von letzterem ist ein eine reziproke Masse oder ein reziprokes
Volumen repräsentierendes Einstellsignal "k" zugeführt. Der Multiplizierer 23₃ gibt an einem Ausgang ein eine Frequenz F repräsentierendes Frequenz-Signal "F" ab.

Ein Eingang eines Dreifach-Komparators 23₇ ist mit dem Ausgang des Multiplizierers 23₃ verbunden. Ein Ausgang von ihm liegt an einem Eingang der zweiten Teilschaltung 22 und speist diesen mit einem Signal s wie folgt:
- Wenn das Frequenz-Signal "F" Werte kleiner null repräsentiert, repräsentiert das Signal s null.
- Wenn das Frequenz-Signal "F" Werte zwischen null und einem Maximalwert Fₘₐₓ repräsentiert, ist das Signal s gleich dem Frequenz-Signal "F" selbst.
- Wenn das Frequenz-Signal "F" Werte größer als der Maximalwert Fₘₐₓ repräsentiert, repräsentiert das Signal s den Maximalwert Fₘₐₓ.

Dieser Verlauf des Signals s ist in Fig. 5 zu sehen.

An dieser Stelle ist hervorzuheben, daß die obige Aussage, das Frequenz-Signal "F" könne kleiner null sein, kein Widerspruch zu der eingangs gemachten Feststellung ist, es gibt keine negativen Frequenzen. Die letzte Aussage bezieht sich nämlich auf die Eigenschaft der Teilschaltung 22, die die variable Frequenz eines Wechselstrom- oder -spannungs-Generators dem Durchfluß q zuordnet. Die Frequenz von Wechselströmen-
oder -spannungen kann aber nur positiv sein.

Anders dagegen das Frequenz-Signal "F"; es repräsentiert eine Größe, die sich aus der Multiplikation des den Durchfluß-Mittelwert qₘ repräsentierenden Signals
"qₘ" mit dem ein reziprokes Volumen bzw. eine reziproke Masse repräsentierenden Einstellsignal "k" ergibt; die genannte Größe repräsentiert also eine Frequenz.
Das Frequenz-Signal "F" kann aber sehr wohl negative Werte annehmen, nämlich dann, wenn die oben erläuterten Gegen-Durchflüsse -q' auftreten.

In Fig. 4 ist mit dem Ausgang des Dreifach-Komparators 23₇ ferner ein erster Eingang eines zweiten Multiplizierers 23₃ verbunden, von dem ein zweiter Eingang das Taktdauer-Signal "∂t" zugeführt erhält. Darauf folgt ein zweiter Dividierer 23₃, von dem ein erster Eingang an einem Ausgang des Multiplizierers 23₃ liegt und ein zweiter Eingang mit dem Einstellsignal "k" gespeist ist. Ein erster Eingang eines dritten Multiplizierers 23₁₃ liegt am Ausgang der Mittelwertstufe 23₂, und ein zweiter Eingang ist mit dem Taktdauer-Signal "∂t" gespeist.

Ein Subtrahend-Eingang eines Summierer/Subtrahierers 23₁₁ ist mit einem Ausgang des Dividierers 23₃, ein erster Addend-Eingang mit einem Ausgang des Multiplizierers 23₁₃ und ein zweiter Addend-Eingang mit dem Ausgang des Schreib/Lese-Speichers 23₄ verbunden. Ein Ausgang des Summierer/Subtrahierers 23₁₁ liegt an einem vom Taktsignal enableten Eingang des Schreib/Lese-Speichers 23₄.

In den Schreib/Lese-Speicher 23₄ wird das Ausgangssignal des Summierer/Subtrahierers 23₁₁ immer während fallender Flanken der Taktimpulse eingelesen, vgl. die Pfeile an deren Verlauf. Da das Durchfluß-Mittelwert-Signal "qₘ" immer während der steigenden Flanken der Taktimpulse zur Verfügung gestellt wird, liegt ein zu einer direkt vorausgegangenen Taktperiode in den Schreib/LeseSpeicher 23₄ eingelesener Wert eine halbe, direkt folgende Taktperiode lang am Eingang des Summierers 23₃, bis ein neuer Wert in den Schreib/Lese-Speicher 23₄ gelangt.

Somit wird ein Gegen-Durchfluß -q' bereits nach einer einzigen Taktperiode vom Durchfluß abgezogen; es erfolgt also im Gegensatz zu der eingangs erwähnten Bedämpfung eine unverzügliche Bilanzierung.

Beim Einschalten des Durchflußmessers wird in den Schreib/Lese-Speicher 23₄ ein geeigneter Anfangswert, z.B. bevorzugt ein Nullwert, eingelesen. Auch während laufenden Messungen kann es zweckmäßig sein, den Nullwert einzulesen und damit ein Reset des Schreib/Lese-Speicher 23₄ auszuführen.

In Fig. 4 ist noch gestrichelt eingezeichnet, daß mittels eines Komparators 23₁₃ mit nachfolgendem Akkumulator 23₁₄ die Gegen-Durchflüsse -q' aufsummiert und gegebenenfalls angezeigt oder anderweitig weiterverarbeitet werden können. Der Komparators 23₁₃ ist, z.B. durch Dimensionierung einer Schaltschwelle so eingestellt, daß (positive) Werte seines Eingangssignale unterdrückt werden.

Zur gewählten, in Apostrophe gesetzten Schreibweise der nicht aus Ziffern bestehenden Bezugszeichen ist noch anzumerken, daß dadurch ausgedrückt wird, daß es sich um Bezugszeichen für Signale handelt, die die entsprechenden, ohne Apostrophe vorkommenden Größen repräsentieren; der Informationsinhalt dieser Signale ist daher die jeweilige Größe, nicht jedoch das Signal selbst.

Die Funktionen der einzelnen Stufen des Blockschaltbilds von Fig. 4 können auch mittels eines entsprechend programmierten Mikroprozessors realisiert werden, dessen Verwendung sich dabei bevorzugt dann anbietet, wenn die Auswerte-Elektronik zur Prozessierung des Durchflußsignals bereits einen Mikroprozessor aufweist.

## Patentansprüche

1. Volumen- oder Massedurchflussmesser mit einem Durchflussaufnehmer (1) und mit einer Auswerte-Elektronik (2), die umfasst:
- eine erste Teilschaltung (21) zur Erzeugung eines Durchflusssignals ("q"),
-- das in einem gegebenen Messbereich (m) zum Durchfluss (q) eines zu messenden Fluids mit hoher Genauigkeit proportional ist,
**dadurch gekennzeichnet, dass**
eine zweite Teilschaltung (22) zur Erzeugung eines Ausgangssignals ("q_{c}") vorgesehen ist,
-- dessen Frequenz (f) im gegebenen Messbereich zum Durchfluss des in einer durch den konstruktiven Aufbau des Durchflussaufnehmers bestimmten Mess-Richtung fließenden Fluids mit hoher Genauigkeit proportional ist,
- dass eine dritte Teilschaltung (23) vorgesehen ist,
-- die einen in Mess-Gegenrichtung während einer Taktdauer ∂t auftretenden Gegen-Durchfluss (-q") feststellt, ein entsprechendes Gegen-Durchflusssignal speichert und von einem Durchflusssignal des nächsten gemessenen Durchflusses subtrahiert und
wobei die
dritte Teilschaltung (23) umfasst:
- einen Taktgenerator (23₁),
-- der periodisch Taktimpulse mit einer vorgegebenen Taktdauer ∂t erzeugt,
- eine vom Taktgenerator gesteuerte Mittelwertstufe (23₂),
-- deren Eingang das Durchflusssignal ("q") zugeführt ist und deren Ausgang ein einem über die Taktdauer gemittelten Mittelwert (qₘ) repräsentierendes Durchfluss-Mittelwert-Signal ("qₘ") abgibt,
- einen Schreib/Lese-Speicher (23₄),
- einen ersten Dividierer (23₃),
-- von dem ein Divisor-Eingang mit einem die Taktdauer repräsentierenden Taktdauer-Signal ∂t gespeist ist und
-- von dem ein Dividend-Eingang mit einem Ausgang des Schreib/Lese-Speichers (23₄) verbunden ist,
- einen ersten Summierer (23₅),
-- von dem ein erster Eingang an einem Ausgang der Mittelwertstufe (23₂) und
-- von dem ein zweiter Eingang an einem Ausgang des ersten Dividierers (23₃) liegt,
- einen ersten Multiplizierer (23₆),
-- von dem ein erster Eingang mit einem Ausgang des ersten Summierers (23₅) verbunden ist,
-- von dem ein zweiter Eingang ein eine reziproke Masse oder ein reziprokes Volumen repräsentierendes Einstellsignal ("k") zugeführt erhält und
-- von dem ein Ausgang ein eine Frequenz (F) repräsentierendes Frequenz-Signal ("F") abgibt,
- einen Dreifach-Komparator (23₇),
-- von dem ein Eingang mit dem Ausgang des ersten Multiplizierers (23₆) verbunden ist und
-- von dem ein Ausgang mit einem Eingang der zweiten Teilschaltung (22) verbunden ist und ein Signal (s) abgibt, das
--- null repräsentiert, wenn das Frequenz-Signal ("F") Werte kleiner null repräsentiert,
--- gleich dem Frequenz-Signal ("F") ist, wenn dieses Werte zwischen null und einem einstellbaren Maximalwert (fmax) repräsentiert, und
--- gleich dem Maximalwert (fmax) ist, wenn das Frequenz-Signal ("F") Werte grösser als der Maximalwert (fmax) repräsentiert,
- einen zweiten Multiplizierer (23₈),
-- von dem ein erster Eingang am Ausgang des Dreifach-Komparators (23₇) liegt und
-- von dem ein zweiter Eingang das Taktdauer-Signal ∂t zugeführt erhält,
- einen zweiten Dividierer (23g),
-- von dem ein erster Eingang an einem Ausgang des zweiten Multiplizierers (23₈) liegt und
-- von dem ein zweiter Eingang mit dem Einstellsignal ("k") gespeist ist,
- einen dritten Multiplizierer (23₁₀),
-- von dem ein erster Eingang am Ausgang der Mittelwertstufe (23₂) liegt und
-- von dem ein zweiter Eingang mit dem Taktdauer-Signal ∂t gespeist ist,
- einen Summierer/Subtrahierer (23₁₁), von dem
-- ein Subtrahend-Eingang an einem Ausgang des zweiten Dividierers (23₉),
-- ein erster Addend-Eingang an einem Ausgang des dritten Multiplizierers (23₁₀) und
-- ein zweiter Addend-Eingang am Ausgang des Schreib/Lese-Speichers (23₄) liegt sowie
-- ein Ausgang an einem vom Taktsignal enableten Eingang des Schreib/Lese-Speichers (23₄) liegt.

2. Volumen- oder Massedurchflussmesser nach Anspruch 1, bei dem die Auswerte-Elektronik (2) die Gegen-Durchflusssignale separat aufsummiert und für eine Weiterverarbeitung und/oder Anzeige zur Verfügung stellt.

## Claims

1. Volume flowmeter or mass flowmeter with a flow sensor (1) and with evaluation electronics (2), which comprise:
- a first sub-circuit (21) designed to generate a flow signal ("q"),
-- which is proportional, with a high degree of accuracy, to the flow (q) of a fluid to be measured in a given measuring range (m),
**characterized in that**
a second sub-circuit (22) is provided to generate an output signal ("q_{c}"),
-- whose frequency (f) is proportional, with a high degree of accuracy, to the flow of the fluid flowing in the measurement direction determined by the constructive design of the flow sensor in the given measuring range,
- **in that** a third sub-circuit (23) is provided,
-- which determines a counter-flow (-q") occurring in the direction contrary to the measurement direction during a clock length αt, saves a corresponding counter-flow signal and subtracts it from a flow signal of the next measured flow, and
wherein
the third sub-circuit (23) comprises:
- a clock generator (23₁),
-- which periodically generates clock pulses with a predefined cycle length αt,
- α mean value level (23₂) controlled by the clock generator,
-- wherein the flow signal ("q") is directed to the input of said mean value level and wherein the output of said mean value level outputs a flow mean value signal ("qₘ") that represents a mean value (qₘ) established during the clock length,
- a read/write memory (23₄),
- a first divider (23₃),
-- where a divisor input is supplied with a cycle length signal αt representing the clock length, and,
-- where a dividend input is connected to an output of the read/write memory (23₄),
- a first totalizer (23₅),
-- wherein a first input of said totalizer is connected to an output of the mean value level (23₂), and
-- wherein a second input of said totalizer is connected to an output of the first divider (23₃),
- a first multiplier (23₆),
-- wherein a first input of said multiplier is connected to an output of the first totalizer (23₅),
-- wherein a second input of said multiplier receives a regulation signal ("k") representing a reciprocal mass or a reciprocal volume, and
-- wherein an output of said multiplier outputs a frequency signal ("F") representing a frequency (F),
- a triple comparator (23₇),
-- wherein an input of said comparator is connected to the output of the first multiplier (23₆), and
-- wherein an output of said comparator is connected to an input of the second sub-circuit (22) and delivers a signal (s), which
--- represents zero if the frequency signal ("F") represents values smaller than zero,
--- is equal to the frequency signal ("F") where this signal represents values between zero and a configurable maximum value (fmax), and
--- is equal to the maximum value (fmax) where the frequency signal ("F") represents values greater than the maximum value (fmax),
- a second multiplier (23₈),
-- wherein a first input of said multiplier is connected to the output of the triple comparator (23₇) and
-- wherein a second input of said multiplier receives the cycle length signal αt,
- a second divider (23₉),
-- wherein a first input of said divider is connected to an output of the second multiplier (23₈), and
-- wherein a second input of said divider is supplied with the regulation signal ("k"),
- a third multiplier (23₁₀),
-- wherein a first input of said multiplier is connected to the output of the mean value level (23₂), and
-- wherein a second input of said multiplier is supplied with the clock length signal αt,
- a totalizer / subtractor (23₁₁), where
-- a subtrahend input is connected to an output of the second divider (23₉),
-- a first addend input is connected to an output of the third multiplier (23₁₀), and
-- a second addend input is connected to the output of the read/write memory (23₄), and
-- an output is connected to an input of the read/write memory (23₄) enabled by the clock signal.

2. Volume flowmeter or mass flowmeter as claimed in Claim 1, wherein the evaluation electronics (2) separately totalize the counter-flow signals and make them available for further processing and/or for display.

## Revendications

1. Débitmètre massique ou volumique avec un capteur de débit (1) et avec une électronique d'exploitation (2), qui comprend :
- un premier sous-circuit (21) destiné à la génération d'un signal de débit ("q").
-- qui est précisément proportionnel au débit (q) d'un fluide à mesurer, dans une gamme de mesure (m) définie,
**caractérisé**
**en ce qu'**est prévu un deuxième sous-circuit (22) destiné à la génération d'un signal de sortie ("q_{c}"),
-- dont la fréquence (f), dans la gamme de mesure définie, est proportionnelle avec une précision élevée au débit de fluide s'écoulant dans une direction de mesure déterminée par la structure du capteur de débit,
- **en ce qu'**est prévu un troisième sous-circuit (23),
-- qui mesure un contre-débit (-q") apparaissant dans la direction contraire à la mesure, pendant une durée de cycle αt, mémorise un signal de contre-débit correspondant et le soustrait au signal du prochain débit à mesurer, et
pour lequel
le troisième sous-circuit (23) comprend :
- un générateur d'impulsions (23₁),
-- qui génère périodiquement des impulsions de synchronisation d'une durée de cycle αt prédéfinie,
- un étage de valeur moyenne (23₂) piloté par le générateur d'impulsions,
-- dont l'entrée est acheminée au signal de débit ("q") et dont la sortie délivre un signal de valeur moyenne de débit ("qₘ") représentant la valeur moyenne (qₘ) établie pendant la durée du cycle,
- une mémoire d'écriture / de lecture (23₄),
- un premier diviseur (23₃),
-- dont une entrée de diviseur est alimentée par un signal de durée de cycle αt représentant la durée de cycle et,
-- dont une entrée de dividende est reliée avec une sortie de la mémoire d'écriture / de lecture (23₄),
- un premier additionneur (23₅),
-- dont une première entrée est reliée à la sortie de l'étage de valeur moyenne (23₂) et
-- dont une deuxième entrée est reliée avec une sortie du premier diviseur (23₃),
- un premier multiplicateur (23₆),
-- dont une première entrée est reliée avec une sortie du premier additionneur (23₅),
-- dont une deuxième entrée se voit acheminer un signal de réglage ("k") représentant une masse réciproque ou un volume réciproque et
-- dont une sortie délivre un signal de fréquence ("F") représentant une fréquence (F),
- un triple comparateur (23₇),
-- dont une entrée est reliée avec la sortie du premier multiplicateur (23₆) et
-- dont une sortie est reliée avec l'entrée du deuxième sous-circuit (22) et délivre un signal (s), qui
--- représente zéro lorsque le signal de fréquence ("F") représente des valeurs inférieures à zéro,
--- est égal au signal de fréquence ("F") lorsque celui-ci représente des valeurs comprises entre zéro et une valeur maximale (fmax) réglable, et
--- est égal à la valeur maximale (fmax) lorsque le signal de fréquence ("F") représente des valeurs supérieures à la valeur maximale (fmax),
- un deuxième multiplicateur (23₈),
-- dont une première entrée est reliée à la sortie du triple comparateur (23₇) et
-- dont une deuxième entrée se voit acheminer le signal de durée de cycle αt,
- un deuxième diviseur (23₉),
-- dont une première entrée est reliée avec une sortie du deuxième multiplicateur (23₈) et
-- dont une deuxième entrée est alimentée avec le signal de réglage ("k"),
- un troisième multiplicateur (23₁₀),
-- dont une première entrée est reliée avec la sortie de l'étage de valeur moyenne (23₂) et
-- dont une deuxième entrée est alimentée avec le signal de durée de cycle αt,
- un additionneur / soustracteur (23₁₁), dont
-- une entrée soustractive est reliée avec une sortie du deuxième diviseur (23₉),
-- une première entrée additionneuse est reliée avec une sortie du troisième multiplicateur (23₁₀) et
-- une deuxième entrée additionneuse est reliée avec la sortie de la mémoire d'écriture / de lecture (23₄), ainsi que
-- une sortie est reliée avec une entrée de la mémoire d'écriture / de lecture (23₄) activée par le signal de synchronisation.

2. Débitmètre volumique ou massique selon la revendication 1, pour lequel l'électronique d'exploitation (2) additionne séparément les signaux de contre-débit et les met à disposition pour un traitement aval et/ou l'affichage.
